# EUROPEAN PATENT APPLICATION

(11) **EP 4 438 323 A1**
(43) Date of publication of application: **02.10.2024**
(21) Application number: 23166073.9
(22) Date of filing: 31.03.2023
(51) Int. Cl.: B60C 1/00, C08L 9/06

(54) **RUBBER COMPOSITION FOR PNEUMATIC TYRE AND PNEUMATIC TYRE PRODUCED THEREFROM**

(71) Applicant: Bridgestone Europe NV/SA, 1930 Zaventem (BE)
(72) Inventor: PIETROSANTO, Arianna, 00128 Rome (IT); COTUGNO, Salvatore, 00128 Rome (IT)
(74) Representative: Marks & Clerk LLP

(57) **Abstract**

A rubber composition for a pneumatic tyre and pneumatic tyre produced therefrom, the rubber composition comprising a copolymer of styrene and butadiene (SBR), a plasticiser system comprising a hydrocarbon resin, and a filler system comprising a silica.

## Description

### FIELD OF THE INVENTION

The present invention is directed to a rubber composition for a pneumatic tyre, the use of the rubber composition in the manufacture of a pneumatic tyre, and pneumatic tyres comprising or prepared from the rubber composition. The pneumatic tyres are suitable for passenger-type motor vehicles.

### BACKGROUND TO THE INVENTION

When designing pneumatic tyres for motor vehicles, there is a need to ensure that the tyres have properties which are well-suited to the intended use by the end-user. It will be appreciated that different end-uses may demand different properties. There may therefore exist a need to maximise certain properties, while ensuring that others are not too greatly compromised. In other words, there may be a need to ensure a desirable balance of certain properties.

For certain end-uses, a pneumatic tyre should be able to exhibit strong performance across different road conditions. For example, the tyre should exhibit strong wet traction and braking while also exhibiting good dry handling, enabling high performance on both wet and dry surfaces to be achieved. There is therefore a need to strike a desirable balance between wet and dry performance. At the same time, the abrasion resistance of the tyre should remain desirably high.

Owing to the need to balance different properties, manufacturing such a tyre poses a particular challenge for tyre designers. The ingredients, and the amounts and relative ratios thereof, in the rubber composition from which the tyre is produced must be carefully controlled. Rubber compositions for tyres are known in the art, for example in EP 2 643 401 B1, EP 2 643 403 B1, EP 3 414 284 B1, US10689507, and WO2013/039499. However, there remains a need in the art to provide pneumatic tyres which better optimise both wet and dry handling performance, while maintaining desirable levels of other properties such as abrasion resistance.

### SUMMARY OF THE INVENTION

The present inventors have discovered that wet handling performance and/or dry handling performance can be optimized by controlling the amount of certain ingredients present within a rubber composition and/or the relative ratios thereof. Meanwhile, a desirable level of abrasion resistance can also be maintained.

Viewed from a first aspect, the present invention is directed to a rubber composition for a pneumatic tyre comprising:
a copolymer of styrene and butadiene (SBR), optionally functionalised, having a glass transition temperature (T_{g}) of less than -20 °C;
a plasticiser system comprising one or more hydrocarbon resins, wherein the total amount of hydrocarbon resin in the rubber composition is at least 45 phr; and
a filler system comprising one or more silicas, including a first silica having a CTAB surface area of at least 150 m²g⁻¹, and optionally one or more additional fillers, wherein the first silica is present in the rubber composition in an amount of at least 110 phr,
wherein the ratio of the total amount of the filler system to the total amount of the plasticiser system on a parts per hundred rubber (phr) basis in the rubber composition is at least 1.75:1.

Viewed from a second aspect, the present invention is directed to the use of the rubber composition as described hereinabove in the manufacture of a pneumatic tyre.

Viewed from a third aspect, the present invention is directed to a pneumatic tyre comprising the rubber composition as described hereinabove.

Viewed from a fourth aspect, the present invention is directed to a pneumatic tyre prepared from the rubber composition as described hereinabove.

Further advantageous features of the present invention are set out in the description of the invention below, the figures and the dependent claims.

### BRIEF DESCRIPTION OF THE FIGURES

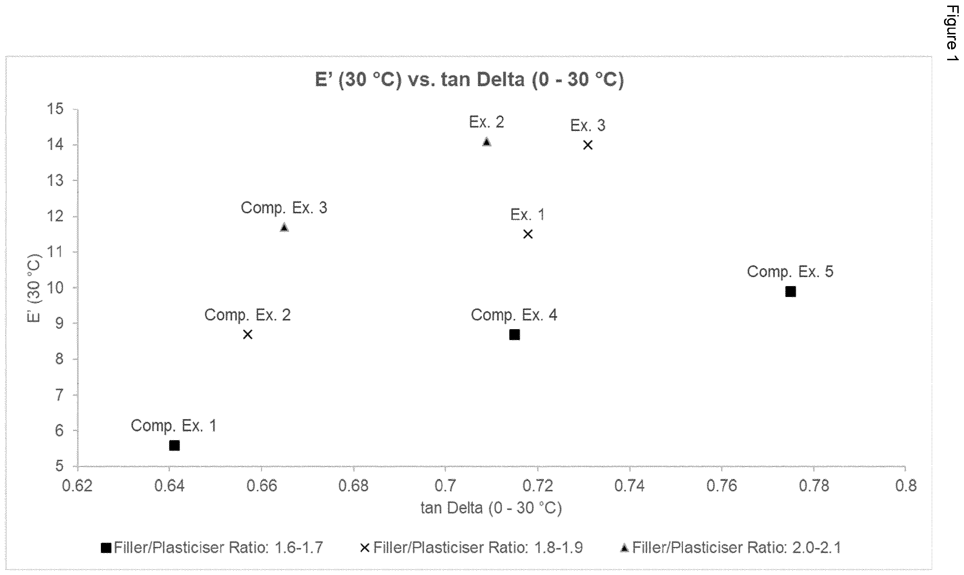

Figure 1 shows the E' (30 °C) and tan Delta (0 - 30 °C) data for certain Examples of the present invention and for certain Comparative Examples. The legend shows for each data point the ratio of the total amount of the filler system to the total amount of the plasticiser system on a parts per hundred rubber (phr) basis in the rubber composition.

### DETAILED DESCRIPTION OF THE INVENTION

The present invention is, in part, based on the discovery by the inventors that, by controlling the amount of silica and/or the amount of hydrocarbon resin present in a rubber composition, the E'(30°) and/or tan Delta (0 - 30 °C) performance can be optimized. The inventors have also found that the balance between E'(30°) and tan Delta (0 - 30 °C) performance can be optimized by controlling the filler and plasticizer amounts and the ratio of the total amount of the filler system to the total amount of the plasticiser system on a parts per hundred rubber (phr) basis in the rubber composition. Meanwhile, a desirable level of abrasion resistance can also be maintained. Accordingly, rubber compositions of the present invention exhibit a highly desirable balance of properties, which makes them highly suited for pneumatic tyres.

According to the above, in one aspect the present invention provides a rubber composition for a pneumatic tyre comprising:
a copolymer of styrene and butadiene (SBR), optionally functionalised, having a glass transition temperature (T_{g}) of less than -20 °C;
a plasticiser system comprising one or more hydrocarbon resins, wherein the total amount of hydrocarbon resin in the rubber composition is at least 45 phr; and
a filler system comprising one or more silicas, including a first silica having a CTAB surface area of at least 150 m²g⁻¹, and optionally one or more additional fillers, wherein the first silica is present in the rubber composition in an amount of at least 110 phr,
wherein the ratio of the total amount of the filler system to the total amount of the plasticiser system on a parts per hundred rubber (phr) basis in the rubber composition is at least 1.75:1.

### Elastomer

The rubber composition comprises a copolymer of styrene and butadiene (SBR), optionally functionalised, having a glass transition temperature (T_{g}) of less than -20 °C.

Preferably, the copolymer of styrene and butadiene is an emulsion SBR or eSBR (i.e. an SBR prepared by emulsion polymerization), a solution SBR or sSBR (i.e. an SBR prepared by solution polymerization), or a mixture of both.

Preferably, the T_{g} of the copolymer of styrene and butadiene is less than -30 °C, preferably less than -40 °C, more preferably less than -50 °C. Preferably, the T_{g} of the copolymer of styrene and butadiene is from -90°C to -20°C, more preferably from - 75°C to -40°C, still more preferably from -60°C to -50°C. For example, the T_{g} of the copolymer of styrene and butadiene may be -60 °C, -59 °C, -58 °C, -57 °C, -56 °C, -55 °C, -54 °C, -53 °C, -52 °C, - 51 °C, or -50 °C.

The skilled person is aware of how the structure of the copolymer may be modified in order to adjust the T_{g} to the required value.

The copolymer of styrene and butadiene (SBR) may preferably be functionalised. The copolymer of styrene and butadiene (SBR) may preferably comprise one or more functional groups selected from the group consisting of alcohol, epoxide, carboxyl, ester, amide, amine, imine, imide, nitrile, oxime, thiol, sulfide, sulfoxide, sulfone, sulfinic acid, sulfonic acid, sulfonate ester, thiocarboxylic acid, thioester, silane, alkoxysilane, aminosilane and silanol.

Preferably, the SBR is functionalised with silicon-containing groups. For example, the SBR may preferably comprise one or more functional groups selected from silane, silyl ether, alkoxysilane, siloxane, aminosilane, iminosilane, and silanol.

The copolymer of styrene and butadiene may be functionalised with carboxyl groups, preferably terminal carboxyl groups. These carboxyl groups may have a structure according to Formula (I): 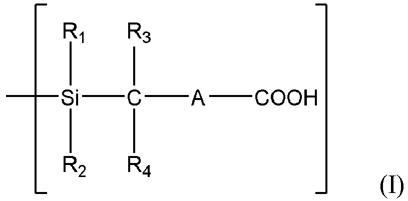 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, NR₇, S and SiR₈R₉; or, an alkylene radical containing one or more heteroatoms, preferably wherein the heteroatoms are one or more selected from the group consisting of O, NR₇, S, and SiR₈R₉, wherein R₇ is hydrogen or C₁ to C₆ linear alkyl; and R₈ and R₉ are the same or different and each independently a C₁ to C₆ linear alkyl.

In Formula (I), R₁ and R₂ may each independently be a hydrogen, C₁ to C₁₂ linear or branched alkyl, C₂ to C₁₂ linear or branched alkenyl, C₁ to C₁₂ linear or branched alkoxy, C₃ to C₁₂ cycloalkyl, C₂ to C₁₂ cycloalkoxy, C₆ to C₁₂ aryl, C₆ to C₁₂ aryloxy, C₇ to C₁₄ arylalkyl, C₇ to C₁₄ alkylaryl, C₆ to C₂₄ alkylaryloxy, C₅ to C₂₄ aralkyl, or a C₆ to C₂₄ aralkoxy radical. Preferably, R₁ and R₂ may each independently be a C₁ to C₆ linear or branched alkyl, C₂ to C₆ linear or branched alkenyl, C₁ to C₆ linear or branched alkoxy, C₃ to C₁₂ cycloalkyl, C₂ to C₁₂ cycloalkoxy, or a C₆ to C₁₂ aryl radical. Preferably, R₁ and R₂ may each independently be a C₁ to C₆ linear or branched alkyl, C₂ to C₆ linear or branched alkenyl, C₁ to C₆ linear or branched alkoxy, or a C₆ to C₁₂ aryl radical. Preferably, R₁ and R₂ may each independently be a C₁ to C₃ linear or branched alkyl, C₂ to C₃ linear or branched alkenyl, C₁ to C₃ linear or branched alkoxy, or a C₆ aryl radical. For example, R₁ and R₂ may each independently be a methyl, tert-butyl, prop-1-enyl, ethoxy, or phenyl radical. More preferably, R₁ and R₂ are methyl radicals.

R₃ and R₄ may each independently be a hydrogen, C₁ to C₁₂ linear or branched alkyl, C₃ to C₁₂ cycloalkyl, C₆ to C₁₂ aryl, C₅ to C₂₄ aralkyl, or a C₅ to C₂₄ alkaryl radical. Preferably R₃ and R₄ may each independently be a hydrogen, C₁ to C₆ linear or branched alkyl, C₂ to C₆ linear or branched alkenyl, C₁ to C₆ linear or branched alkoxy, or a C₆ to C₁₂ aryl radical. More preferably, R₃ and R₄ may each independently be a hydrogen or methyl radical. In a particular embodiment, R₃/R₄ and "A" together form a C₆ aryl.

"A" may independently be a substituted or unsubstituted C₁ to C₆ linear alkyl radical; one or more heteroatoms selected from the group consisting of O, NR₇, S and SiR₈R₉; or, a substituted or unsubstituted C₁ to C₆ linear alkyl radical containing one or more heteroatoms selected from the group consisting of O, NR₇, S, and SiR₈R₉. Preferably, "A" may independently be a substituted or unsubstituted C₁ to C₃ linear alkyl radical; one or more heteroatoms selected from the group consisting of O, NR₇, S and SiR₈R₉; or, a substituted or unsubstituted C₁ to C₃ linear alkyl radical containing one or more heteroatoms selected from the group consisting of O, NR₇, S, and SiR₈R₉. Where "A" is substituted, it may be substituted with one or more selected from the group consisting of a C₁ to C₆ linear alkyl radical, and a C₆ to C₁₂ aryl radical. Preferably, "A" may be substituted with a C₁ to C₃ linear alkyl radical or a C₆ aryl radical. More preferably, "A" may be substituted with a C₁ radical. R₇ may be hydrogen, C₁ to C₆ linear alkyl, for example methyl, or trimethylsilyl. R₈ and R₉ may independently be C₁ to C₆ linear alkyl, for example methyl. Preferably, A is a C₂ alkyl radical containing an S atom. The structure of "A" as a C₂ alkyl radical containing an S atom is presented below.

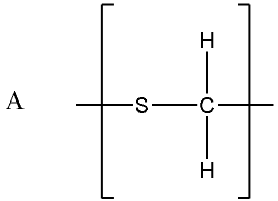

The carboxyl groups may be present as a carboxylate of the Formula (II): 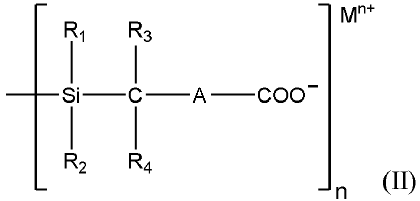 wherein:
R₁ and R₂ are as defined above for Formula (I);
R₃ and R₄ are as defined above for Formula (I);
A is as defined above for Formula (I);
M is a metal or semi-metal of valency 1 to 4, for example, Li, Na, K, Mg, Ca, Zn, Fe, Co, Ni, Al, Nd, Ti, Sn, Si, Zr, V, Mo or W; and
n is an integer from 1 to 4.

In the compounds of Formula (II), M may be Li and n may be 1.

The further definitions of R₁, R₂, R₃, R₄, R₇, R₈ and R₉ in Formula (II) are the same as those above for Formula (I).

The functionalised SBR may preferably be obtainable by reaction of the SSBR copolymer with one or more functionalising reagents in the form of silalactones. The silalactones may be compounds of the Formula (III): 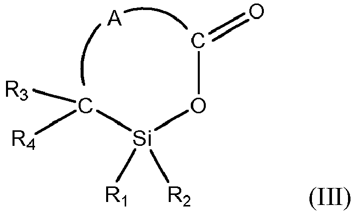 wherein
R₁ and R₂ are as defined above for Formula (I);
R₃ and R₄ are as defined above for Formula (I); and,
A is as defined above for Formula (I).

The further definitions of R₁, R₂, R₃, R₄, R₇, R₈ and R₉ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trimethyl-l-oxa-2-silacyclohexan-6-one, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 2,2-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

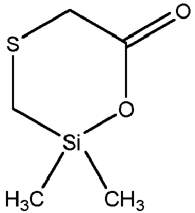

The carboxyl group may preferably be bonded to the SBR copolymer via one or more divalent structural elements of the Formula (V): 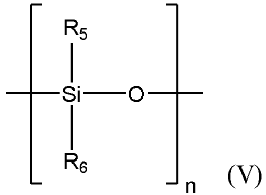 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si.

When the divalent structural element is present, the SBR copolymer is bonded at the silicon end of the divalent structural element according to the below:

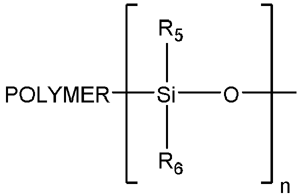

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV): 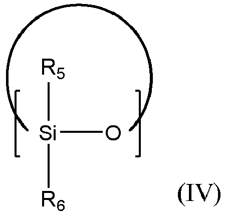 wherein
n is as defined above for Formula (V);
R₅, R₆ are as defined above for Formula (V).

R₅ and R₆ may each independently a hydrogen, C₁ to C₁₂ linear or branched alkyl, C₃ to C₁₂ cycloalkyl, C₆ to C₁₂ aryl, C₇ to C₁₄ aralkyl, or a C₇ to C₁₄ alkaryl radical. Preferably, R₅ and R₆ may each independently be a C₁ to C₆ linear or branched alkyl, preferably, C₁ to C₃ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

It is particularly advantageous for the SBR copolymer to be terminated with carboxyl groups derived from 2,2-dimethyl-1-oxa-4-thia-2-silacyclohexan-6-one that is bonded to the polymer via a divalent structural element derived from hexamethylcyclotrisiloxane. In this embodiment, the carboxyl group of Formula (I) (having R₁, R₂, R₃ and R₄ as methyl radicals and "A" as the C₂ alkyl radical containing an S atom shown above) is bonded to the copolymer by the divalent structural element according to Formula (V), wherein R₅ and R₆ are methyl radicals and n is 3.

The SBR may be functionalised with groups having a structure according to Formula (X): 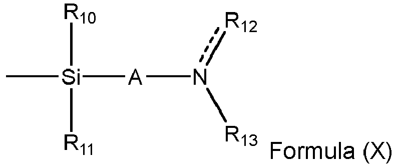 wherein:
A is a C₁-C₁₂ alkylene group or a C₁-C₁₂ alkenylene group;
R₁₀ and R₁₁ are independently selected from a C₁-C₁₂ alkyl group, a C₁-C₁₂ alkenyl group, and a C₁-C₁₂ alkoxy group;
R₁₂ and R₁₃ are independently selected from a C₁-C₁₂ alkyl group, and a -SiR₁₄R₁₅R₁₆ group, wherein R₁₄, R₁₅ and R₁₆ are independently selected from a C₁-C₁₂ alkyl group, a C₁-C₁₂ alkenyl group, and a C₁-C₁₂ alkoxy group, or wherein R₁₂ and the nitrogen atom to which it is bonded represent a branched or unbranched C₃-C₁₂ secondary imino group and R₁₃ is not present.

Preferably wherein:
A is a C₁-C₁₂ alkylene group;
R₁₀ and R₁₁ are independently selected from a C₁-C₁₂ alkyl group, and a C₁-C₁₂ alkoxy group;
R₁₂ and R₁₃ are
a -SiR₁₄R₁₅R₁₆ group, wherein R₁₄, R₁₅ and R₁₆ are independently selected from a C₁-C₁₂ alkyl group, a C₁-C₁₂ alkenyl group, and a C₁-C₁₂ alkoxy group, or wherein R₁₂ and the nitrogen atom to which it is bonded represent a branched or unbranched C₃-C₁₂ secondary imino group and R₁₃ is not present.

More preferably wherein:
A is a C₂-C₄ alkylene group;
R₁₀ is a C₁-C₄ alkoxy group and R₁₁ is a C₁-C₄ alkyl group or a C₁-C₄ alkoxy group, and;
R₁₂ and R₁₃ are each a -SiR₁₄R₁₅R₁₆ group, wherein R₁₄, R₁₅ and R₁₆ are each independently a C₁-C₄ alkyl group, or wherein R₁₂ and the nitrogen atom to which it is bonded represent a branched C₃-C₆ secondary imino group and R₁₃ is not present.

Still more preferably wherein:
A is a C₂-C₄ alkylene group;
R₁₀ is a C₁-C₄ alkoxy group and R₁₁ is a C₁-C₄ alkyl group or a C₁-C₄ alkoxy group, and;
R₁₂ and R₁₃ are each a -SiR₁₄R₁₅R₁₆ group, wherein R₁₄, R₁₅ and R₁₆ are a C₁-C₃ alkyl group, or wherein R₁₂ and the nitrogen atom to which it is bonded represent a branched C₆ secondary imino group and R₁₃ is not present.

Preferably, the SBR copolymer may have a styrene content of from 1% to 40% by weight of the SBR copolymer. Preferably, the SBR copolymer may have a styrene content of from 2% to 20% by weight, more preferably from 5% to 15% by weight, still more preferably from 7 to 13 % by weight, for example 9%, 10 %, or 11% by weight of the SBR copolymer. Alternatively, the SBR copolymer may preferably have a styrene content of from 5% to 40% by weight, more preferably from 10% to 35% by weight, still more preferably from 15 to 30 % by weight, yet more preferably from 20 to 25 % by weight, for example 22%, 23 %, or 24% by weight of the SBR copolymer.

The SBR copolymer may preferably have a vinyl content of from 1% to 60% by weight of the SBR copolymer. Preferably, the SBR copolymer may have a vinyl content of from 5% to 40%, more preferably from 7% to 30%, still more preferably 10 to 20 %, yet more preferably 12 to 18%, for example 14%, 15%, or 16 % by weight of the SBR copolymer. Alternatively, the SBR copolymer may preferably have a vinyl content of from 10% to 50%, more preferably from 20% to 45%, still more preferably 30 to 40 %, yet more preferably 35 to 40%, for example 36%, 37%, or 38% by weight of the SBR copolymer.

The SBR copolymer may preferably have mean molar masses (number-average, Mn) of 10,000 to 2,000,000 g/mol, preferably 100,000 to 1,000,000 g/mol.

The SBR copolymer may preferably have a Mooney viscosity [ML 1+4 (100° C)] of 10 to 200 Mooney units, for example 30 to 150 Mooney units, 40 to 90 Mooney units, 50 to 60 Mooney units, for example 50, 51, 52, 53, 54, 55, 56, 57, 58, 59, 60 Mooney units.

The SBR copolymer may preferably be extended with an extender oil. The extender oil may be one or more selected from the group consisting of DAE (Distillate Aromatic Extract), Tdae (Treated Distillate Aromatic Extract), MES (Mild extraction solvate), RAE (Residual Aromatic Extract), TRAE (Treated Residual Aromatic Extract), naphthenic oil, heavy naphthenic oils, paraffin oils, vegetable oils such as coconut oil, synthetic oils such as alkylbenzene oils and castor oils. Preferably, the SBR copolymer is extended with an aromatic oil, such as Treated Distillate Aromatic Extract oil (Tdae). Preferably, the extended SBR copolymer may have an extender oil content of from 1% to 50%, more preferably from 10% to 40%, still more preferably 20 to 30 %, yet more preferably 25 to 30%, for example 26%, 27%, or 28 % by weight of the SBR copolymer. Herein, extender oils are considered as forming part of the plasticiser system of the rubber composition.

The synthesis of sSBR copolymers terminated with carboxyl groups and the compounds of Formulae (I) to (V) above is discussed in detail in, for example, International patent application number WO 2014/173706 A1.

The copolymer of styrene and butadiene hereinbefore described may be described as a first elastomer in the rubber composition. In addition to this first elastomer, the rubber composition may include one or more further elastomers, for example one, two, three, or more further elastomers.

Any of the further elastomers may be a diene elastomer. In other words, preferably the rubber composition comprises a diene elastomer. A diene elastomer is an elastomer derived at least in part (e.g. in a homopolymer or a copolymer) of diene monomers, i.e. monomers carrying two carbon-carbon double bonds, which may or may not be conjugated. Examples of suitable diene elastomers include polybutadienes, natural rubber, synthetic polyisoprenes, butadiene copolymers, isoprene copolymers and mixtures thereof. In preferred embodiments, the diene elastomer is a polybutadiene rubber. Preferably, the T_{g} of the polybutadiene rubber may be from -120°C to -80°C, more preferably from -110°C to -90°C, for example -110°C, -100°C, -95°C, or - 90°C. When present, the diene elastomer may preferably be included in an amount of from 20 to 60 phr, more preferably from 40 to 55 phr, for example 40, 45, 50, or 55 phr or any intermediate value.

Any of the further elastomers may preferably be a further copolymer of styrene and butadiene, optionally functionalised, preferably having a T_{g} of less than -20 °C. In other words, preferably the rubber composition further comprises another copolymer of styrene and butadiene, optionally functionalised, preferably having a T_{g} of less than - 20 °C. In other words, preferably the rubber composition comprises at least (i) a first copolymer of styrene and butadiene, optionally functionalised, having a T_{g} of less than -20 °C, as hereinbefore described; and (ii) at least a second copolymer of styrene and butadiene, optionally functionalised, preferably having a T_{g} of less than -20 °C. Any of the embodiments described hereinbefore in relation to the first copolymer of styrene and butadiene may also preferably apply to any of the further copolymers of styrene and butadiene, for example to a second copolymer of styrene and butadiene.

Preferably, the rubber composition comprises at least a second elastomer in addition to the copolymer of styrene and butadiene, optionally functionalised, having a T_{g} of less than -20 °C hereinbefore described. Preferably, the second elastomer is selected from (i) a second copolymer of styrene and butadiene, optionally functionalised, preferably having a T_{g} of less than -20 °C; and (ii) a butadine rubber.

Preferably, each elastomer in the rubber composition has a T_{g} of less than -20°C.

Preferably, the rubber composition comprises a copolymer of styrene and butadiene which is functionalised and a copolymer of styrene and butadiene which is oil extended.

Preferably the rubber composition comprises an eSBR and a preferably functionalised sSBR.

### Plasticiser system

The rubber composition comprises a plasticiser system. As used herein, the term "plasticiser system" collectively refers to the ingredients in the rubber composition which are conventionally known in the art to be plasticisers.

The plasticiser system comprises at least one hydrocarbon resin. Resins are compounds that are solid or highly viscous at standard ambient temperature and pressure (25°C, 10⁵ Pa). Hydrocarbon resins are essentially based on carbon and hydrogen but may comprise other types of atoms. They can be aliphatic, cycloaliphatic, aromatic, hydrogenated aromatic, and aliphatic/aromatic, i.e. based on aliphatic and/or aromatic monomers. Hydrocarbon resins can also be qualified as thermoplastic resins in the sense that they soften on heating and can thus be moulded.

Preferred examples of such hydrocarbon resins include those selected from the group consisting of cyclopentadiene homopolymer or copolymer resins (abbreviated as CPD), dicyclopentadiene homopolymer or copolymer resins (abbreviated as DCPD), terpene homopolymer or copolymer resins, rosinic resins, C₅ homopolymer or copolymer resins which may preferably be partially or fully hydrogenated, C₉ homopolymer or copolymer resins which may preferably be partially or fully hydrogenated, alpha-methyl-styrene homopolymer or copolymer resins and combinations thereof.

Preferably, the hydrocarbon resin has a T_{g} of from 0 to 90 °C, more preferably from 20 to 90 °C, still more preferably from 50 to 80 °C, yet more preferably from 60 to 80 °C, e.g. from 69 to 79 °C. Alternatively, preferably the hydrocarbon resin has a T_{g} of from 0 to 90 °C, more preferably from 20 to 70 °C, still more preferably from 40 to 55 °C, e.g. from 45 to 50 °C.

Preferably, the hydrocarbon resin is an aromatic resin. Preferably, the hydrocarbon resin is a partially or totally hydrogenated resin.

Preferably, the hydrocarbon resin may comprise (e.g. consist of) a terpenic resin. Terpenic resins include resins that are a mixture of terpene monomers (referred to herein as a heteropolymer), or a terpene homopolymer, wherein the terpene homopolymer may be an α-pinene homopolymer. They may be, for example an oligoterpene resin (i.e., a resin prepared from a terpene as the sole monomer), a terpene hydrocarbon resin (i.e., a resin prepared from a terpene and non-terpene hydrocarbon monomer(s)), and/or a terpene phenolic resin (i.e., a resin prepared from a terpene and phenolic compound). The basic molecular formula of terpenes are multiples of (C₅H₈)ₙ where n is the number of linked isoprene units and is greater than 1. Examples of terpenes suitable for use in the terpenic resin include, without limitation, isoprene, limonene, terpene, α-pinene, β-pinene, δ-3 carene, β-phellandrene and pyrolysates of α-pinene, β-pinene, δ-3 carene, δ-2 carene, turpentine, and combinations thereof. For example terpenic resin may comprise α-pinene or a mixture of α-pinene and β-pinene monomers. The terpenic resin may be substantially free of limonene, wherein the amount of limonene is less than 10 wt%, preferably less than 5 wt% and more preferably less than 1 wt% based upon the total amount of the terpenic resin. In preferred embodiments, the terpenic resin comprises a mixture of α-pinene and β-pinene monomers wherein limonene is present in an amount of less than 10 wt%. Suitable terpenic resins include Kraton Sylvatraxx 8115.

The softening point of the terpenic resin may preferably be at least 70°C, preferably from 70°C to 160°C, more preferably from 100°C to 130°C, for example 100°C, 105°C, 110°C, 115°C, 120°C, 125°C, or 130°C. The softening point of a material is the temperature at which is softens beyond a certain softness, which is measured using a ring and ball apparatus according to ISO 4625.

The aromaticity of the terpenic resin as measured by ¹H NMR may preferably be greater than 0, preferably from 0.1 to 5, preferably 1. Aromaticity values defined herein are measured by ¹H NMR as the percentage content of aromatic protons having a chemical shift from 6.5 to 8.5 ppm.

Preferably, the hydrocarbon resin may comprise (e.g. consist of) a C₅ resin, more preferably a partially hydrogenated C₅ resin. As used herein, the term "C₅ resin" refers to a resin obtained by polymerisation of a cracked naphtha feed that contains C₅ monomers. C₅ monomers include olefins, linear conjugated diolefins and cyclic conjugated diolefins. Other monomers may additionally be present in the feed and these include, but are not limited to, dicyclopentadiene (DCPD).

In one embodiment, the C₅ resin for use in the invention may be obtained by copolymerisation of C₅ monomers and dicyclopentadiene (DCPD) monomers. Where any DCPD monomers are present, these will generally be provided in low amounts. For example, the content of DCPD in the feed used to produce the resin may be less than about 5 wt.%, e.g. less than about 2 wt.%. Preferably, the C₅ resin may comprise monomer units derived from C₅ monomers and from DCPD. As such the partially hydrogenated C₅ resin may comprise a partially hydrogenated C₅ and dicyclopentadiene (DCPD) copolymer, preferably wherein DCPD is present in an amount of less than 5 wt% of the C₅ and DCPD monomers. However, in another embodiment, the feed used to provide the C₅ resin may exclude any DCPD monomer. This monomer can be removed from the feed stream by methods generally known in the art. In one embodiment, the C₅ resin may therefore consist essentially of monomer units derived from C₅ monomers.

As used herein, the term "partially hydrogenated" means that the resin component contains less than 100% olefinic protons, which may be determined by ¹H NMR spectroscopy. Partially hydrogenated resins are well known in the art and may have different degrees of hydrogenation. In some embodiments, the partially hydrogenated resin may contain less than 95% olefinic protons, more preferably less than 90% olefinic protons. In some embodiments, it may contain less than 75% olefinic protons, for example less than 50% olefinic protons. In some embodiments, the partially hydrogenated resin may contain less than 40% olefinic protons, less than 25% olefinic protons, less than 15% olefinic protons, or less than 10% olefinic protons. For example, it may contain less than 9%, less than 8%, less than 7%, or less than 6% olefinic protons. In one embodiment, the partially hydrogenated resin may contain about 5% or more olefinic protons. For example, it may contain from 5% to 90% olefinic protons. In one embodiment, the partially hydrogenated resin may contain about 5% olefinic protons, i.e. it will be about 95% hydrogenated. Suitable partially hydrogenated C₅ resins include Eastman Impera E1780.

The softening point of the partially hydrogenated C₅ resin may preferably be at least 70°C, preferably from 70°C to 160°C, more preferably from 110°C to 150°C, for example 110°C, 115°C, 120°C, 125°C, 130°C, 135°C, 140°C, 145°C, or 150°C. Preferably, the C₅ resin has a T_{g} of from 0 to 90 °C, more preferably from 20 to 90 °C, still more preferably from 50 to 80 °C, yet more preferably from 60 to 80 °C, e.g. from 69 to 79 °C.

The aromaticity of the partially hydrogenated C₅ resin as measured by NMR may preferably be greater than 0, preferably from 0.1 to 5, preferably 2.

Preferably, the weight average molecular weight (Mw) of the C₅ resin is greater than 200 Da, more preferably greater than 400 Da, still more preferably greater than 600 Da. Preferably, the weight average molecular weight (Mw) of the C₅ resin is from 200 to 1200 Da, more preferably from 350 to 1000 Da, still more preferably from 500 to 900 Da, yet more preferably from 600 to 800 Da, e.g. from 650 to 750 Da.

Preferably, the hydrocarbon resin may comprise (e.g. consist of) a C₉ resin. The term "C₉ resin" refers to a C₉ synthetic petroleum resin and examples include a polymer obtained by polymerization using a Friedel-Crafts catalyst such as AlCl₃ or BF₃. Examples of the C₉ resin include a copolymer containing indene, styrene, α-methyl styrene, vinyl toluene, or the like as main components. The C₉ resin may preferably be at least partially hydrogenated.

Preferably, the weight average molecular weight (Mw) of the C₉ resin is greater than 1500 Da, more preferably greater than 2000 Da, still more preferably greater than 2500 Da. Preferably, the weight average molecular weight (Mw) of the C₉ resin is from 1500 to 4000 Da, more preferably from 2000 to 3500 Da, still more preferably from 2500 to 3000 Da, yet more preferably from 2600-2800 Da.

Preferably, the glass transition temperature (T_{g}) of the C₉ resin is from 0 to 90 °C, more preferably from 20 to 70 °C, still more preferably from 40 to 55 °C, e.g. from 45 to 50 °C. Preferably, the C₉ resin has a softening point of 100°C or higher, more preferably from 110°C to 135°C.

Preferably, the hydrocarbon resin may comprise (e.g. consist of) a rosinic resin. Rosinic resins include resins that are mixtures of isomer organic acids (e.g. resin acid or rosin acids), characterised by a common structure comprising three C₆ fused rings, double bonds and a single carboxylic group. Rosin is a solid resinous material that occurs naturally in pine trees. There are three major sources of rosin, (1) gum rosin from the oleoresin extrudate of the living pine tree, (2) wood rosin from the oleoresin contained in the aged stumps; and (3) tall oil rosin from the waste carboxyl group to the liquor recovered as a by-product in the Kraft paper industry. The primary component of rosin is typically abietic acid. Rosinic resins include rosin ester resins, which may be an ester of rosin and a polyhydric alcohol. The polyhydric alcohol can be selected from the group consisting of ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, and mixtures thereof. Suitable rosinic resins include Kraton Sylvatraxx 2097.

The softening point of the rosinic resin may preferably be greater than 50°C, preferably from 70°C to 130°C, more preferably from 90°C to 110°C, for example 90°C, 95°C, 100°C, or 110°C or any intermediate value.

The aromaticity of the rosinic resin as measured by ¹H NMR may preferably be greater than 1, preferably from 3.5 to 9.5, preferably 6.5.

The hydrocarbon resin hereinbefore described may be described as a first hydrocarbon resin in the plasticiser system. In addition to this first hydrocarbon resin, the plasticiser system may include one or more further hydrocarbon resins, for example one, two, three, or more further hydrocarbon resins. Any of the embodiments hereinbefore described in relation to the first hydrocarbon resin may also preferably apply to any of the further hydrocarbon resins, e.g. to a second hydrocarbon resin.

Preferably, the plasticiser system comprises a first hydrocarbon resin and a second hydrocarbon resin. Preferably, the ratio of the amount of the first hydrocarbon resin in the rubber composition to the amount of the second hydrocarbon resin in the rubber composition on a parts per hundred rubber (phr) basis is from 0.8:1.2 to 1.2:0.8, more preferably from 0.95:1.05 to 1.05:0.95, still more preferably substantially 1:1.

Preferably, the first hydrocarbon resin is a C₅ hydrocarbon resin, preferably partially hydrogenated and/or having a T_{g} of from 60 to 80 °C; and/or preferably the second hydrocarbon resin is a C₉ hydrocarbon resin, preferably having a T_{g} of from 40 to 55 °C.
tan Delta (0 - 30 °C) is an indicator of wet balance/handling in a tyre. As described in the Examples section, the present inventors have discovered that as the amount of hydrocarbon resin present in the rubber composition increases, the tan Delta (0 - 30 °C) performance increases. Accordingly, by controlling the amount of hydrocarbon resin present in a plasticiser system of a rubber composition, tan Delta (0 - 30 °C) performance can be optimized.

Accordingly, the total amount of hydrocarbon resin in the rubber composition is at least 45 phr, preferably at least 47.5 phr, more preferably at least 50 phr. The total amount of hydrocarbon resin in the rubber composition is calculated based on all hydrocarbon resins present in the rubber composition. Preferably, all hydrocarbon resins in the rubber composition are part of the plasticiser system. In other words, preferably all hydrocarbon resins in the rubber composition are plasticisers.

Preferably, the total amount of hydrocarbon resin in the rubber composition is from 45 phr to 80 phr, more preferably from 47.5 phr to 70 phr, still more preferably from 50 phr to 65 phr.

Preferably, the plasticiser system further comprises one or more additional ingredients. In other words, preferably the plasticiser system of the rubber composition comprises one or more additional plasticisers. Such additional plasticisers may be selected from conventional plasticisers known in the art. For example, the plasticiser system preferably further comprises one or more oils, more preferably one or more plasticising oils.

Preferably, the plasticiser system further comprises one or more oils, which are liquid at standard ambient temperature and pressure (25°C, 10⁵ Pa). They may also be referred to as liquid plasticisers. These oils may be, for example, one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, preferably oleates such as octyl oleate or 2-ethylhexyl oleate, phosphate plasticizers, sulfonate plasticizers and mixtures thereof. In preferred embodiments, the oil may be a combination of TDAE oils and octyl oleate.

Any extender oils used to extend the elastomer in the rubber composition are also considered to form part of the plasticiser system.

Preferably, the total amount of oil in the rubber composition is from 5 to 60 phr, more preferably from 10 to 50 phr, still more preferably from 20 to 40 phr, yet more preferably from 25 to 35 phr, e.g. 28 to 32 phr. The total amount of oil includes all plasticiser oils and all extender oils.

tan Delta (0 - 30 °C) is an indicator of wet balance/handling in a tyre. As described in the Examples section, the present inventors have discovered that as the amount of plasticiser system present in the rubber composition increases, the tan Delta (0 - 30 °C) performance increases. Accordingly, by controlling the amount of plasticiser system present in a plasticiser system of a rubber composition, tan Delta (0 - 30 °C) performance can be optimized. Accordingly, the plasticiser system is preferably present in the rubber composition in an amount of at least 70 phr, preferably from 70 to 130 phr, more preferably from 71 to 100 phr.

In addition to a first hydrocarbon resin, preferred plasticiser systems comprise (preferably consist of):
optionally, a second hydrocarbon resin having a T_{g} of from 20 to 90 °C, preferably from 30 to 70 °C, more preferably from 40 to 50 °C; and
at least one oil, preferably a plasticising oil, more preferably RAE oil, and/or an extender oil, wherein the total amount of oil in the rubber composition is preferably from 5 to 60 phr, more preferably from 10 to 50 phr, still more preferably from 20 to 40 phr, yet more preferably from 25 to 35 phr;
preferably wherein the ratio of the amount of the first hydrocarbon resin in the rubber composition to the amount of the second hydrocarbon resin, if present, in the rubber composition on a parts per hundred rubber (phr) basis is from 0.8:1.2 to 1.2:0.8, more preferably from 0.95:1.05 to 1.05:0.95, still more preferably substantially 1:1.

### Filler system

The rubber composition comprises a filler system. As used herein, the term "filler system" collectively refers to the ingredients in the rubber composition which are conventionally known in the art to be fillers.

The filler system comprises a first silica which may have a CTAB surface area of at least 150 m²g⁻¹, preferably at least 160 m²g⁻¹, more preferably at least 180 m²g⁻¹, still more preferably at least 185 m²g⁻¹, yet more preferably at least 200 m²g⁻¹. Preferably, the first silica has a CTAB surface area of from 150 to 300 m²g⁻¹, more preferably from 160 to 270 m²g⁻¹, still more preferably from 170 to 250 m²g⁻¹, yet more preferably from 180 to 225 m²g⁻¹, e.g. 185 to 215 m²g⁻¹. Preferably, the first silica is a high surface area silica.

As used herein, the term "effective surface area" in relation to a silica refers to the product of the CTAB surface area and the amount in which the silica is present in the rubber composition in phr. For example, a silica which has a CTAB surface area of 200 m²g⁻¹ and which is present in the rubber composition in an amount of 110 phr has an effective surface area of 22,000 phr m² g⁻¹. Preferably, the effective surface area of the first silica is at least 16,500 phr m² g⁻¹, more preferably at least 18,000 phr m² g⁻¹. Preferably, the effective surface area of the first silica is at least 20,000 phr m² g⁻¹, preferably at least 22,000 phr m² g⁻¹, more preferably at least 23,000 phr m² g⁻¹, yet more preferably at least 26,000 phr m² g⁻¹.

E'(30°) is an indicator of dry balance/handling. As described in the Examples section, the present inventors have discovered that as the amount of silica present in the rubber composition increases, the E'(30°) performance increases. Accordingly, by controlling the amount of silica present in a filler system of a rubber composition, E'(30°) performance can be optimized.

Accordingly, the first silica is present in the rubber composition in an amount of at least 110 phr, preferably at least 115 phr, more preferably at least 120 phr, still more preferably at least 130 phr. Preferably, the first silica is present in the rubber composition in an amount of from 110 phr to 200 phr, more preferably from 115 phr to 150 phr, still more preferably from 115 to 135 phr, yet more preferably from 120 to 135 phr.

In addition to the first silica hereinbefore described, the filler system may include one or more further silicas, for example one, two, three, or more further silicas. Such further silicas may preferably be selected from high surface area silicas, standard surface area silicas, low surface area silicas, and very low surface area silicas.

Preferably, the plasticiser system comprises a low surface area silica and/or a very low surface area silica. Preferably, such a silica is characterised in that it has a CTAB surface area of from 40 to 120 m² g⁻¹, more preferably from 50 to 110 m² g⁻¹, still more preferably from 60 to 100 m² g⁻¹, yet more preferably from 65 to 95 m² g⁻¹. Preferably, such a silica is present in the rubber composition in an amount of from 0 to 50 phr, more preferably from 2 to 40 phr, still more preferably from 3 to 32 phr, yet more preferably from 5 to 15 phr, most preferably from 7 to 13 phr, e.g. 10 phr.

In other words, preferably the plasticiser system comprises a silica having a CTAB surface area of from 40 to 120 m² g⁻¹, more preferably from 50 to 110 m² g⁻¹, still more preferably from 60 to 100 m² g⁻¹, yet more preferably from 65 to 95 m² g⁻¹. Preferably, such a silica is present in the rubber composition in an amount of from 0 to 50 phr, more preferably from 2 to 40 phr, still more preferably from 3 to 32 phr, yet more preferably from 5 to 15 phr, most preferably from 7 to 13 phr, e.g. 10 phr.

Preferably, the filler system comprises two silicas, wherein the first silica is a silica having a CTAB surface area of greater than 150 m²g⁻¹, wherein the first silica is present in the rubber composition in an amount of at least 110 phr; and wherein the second silica is a low or very low surface area silica, preferably characterised in that it has a CTAB surface area of from 40 to 120 m² g⁻¹.

In other words, preferably the filler system comprises two silicas, wherein the first silica is a silica having a CTAB surface area of greater than 150 m²g⁻¹, wherein the first silica is present in the rubber composition in an amount of at least 110 phr; and wherein the second silica is a silica having a CTAB surface area of from 40 to 120 m² g⁻¹.

As used herein, the term "total effective surface area of all silicas" in a composition refers to the sum of the effective surface areas of all silicas in a composition. For example, if a composition comprises a first silica with an effective surface area of x and a second silica with an effective surface area of y, the total effective surface area of all silicas in the composition would be (x + y). Preferably, the total effective surface area of all silicas in the rubber composition is at least 17,000 phr m² g⁻¹, preferably at least 18,000 phr m² g⁻¹, more preferably at least 20,800 phr m² g⁻¹, still more preferably at least 23,800 phr m² g⁻¹, yet more preferably at least 26,800 phr m² g⁻¹

Preferably, the filler system further comprises one or more additional ingredients. In other words, preferably the filler system of the rubber composition comprises one or more additional fillers. Such additional fillers may be selected from conventional fillers known in the art.

Preferably, the filler system comprises one or more additional silaceous fillers. Additional silaceous fillers that are suitable include precipitated amorphous silica, wet silica (hydrated silicic acid), dry silica (anhydrous silicic acid), fumed silica, calcium silicate, aluminum silicate, magnesium silicate (e.g., Mg₂SiO₄, MgSiOs), magnesium calcium silicate (CaMgSiO₄), aluminum calcium silicate (e.g., Al₂O₃.CaO₂SiO₂).

Preferably, the fillers system comprises one or more aluminium-based mineral fillers. Preferably, the aluminium-based filler is alumina (Al₂O₃) or aluminum hydroxide (e.g. Al(OH)₃).

Preferably, the filler system further comprises carbon black. Preferably, the carbon black is present in the rubber composition in an amount of from 0.5 to 40 phr, more preferably from 10 to 30 phr, still more preferably from 15 to 25 phr, yet more preferably 17 to 23 phr, e.g. 20 phr. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black in the rubber compositions of the present invention is CORAX^{®} N234 by Orion Engineered Carbons.

E'(30°) is an indicator of dry balance/handling. As described in the Examples section, the present inventors have discovered that as the amount of filler system present in the rubber composition increases, the E'(30°) performance increases. Accordingly, by controlling the amount of filler system present in a rubber composition, E'(30°) performance can be optimized. Accordingly, the filler system is preferably present in the rubber composition in an amount of from 110 phr to 250 phr, more preferably from 115 to 200 phr, still more preferably from 120 to 190 phr, yet more preferably 140 to 180 phr.

In addition to the first silica having a CTAB surface area of at least 150 m²g⁻¹, wherein the first silica is present in the rubber composition in an amount of at least 110 phr, preferred filler systems comprise (preferably consist of):
a low or very low surface area silica, preferably having a CTAB surface area of from 50 to 110 m² g⁻¹ ; and
carbon black, preferably present in the rubber composition in an amount of from 0.5 to 40 phr, more preferably from 10 to 30 phr, still more preferably from 15 to 25 phr, yet more preferably 18 to 22 phr,
wherein the low or very low surface area silica is preferably present in the rubber composition in an amount of from 3 to 20 phr, preferably from 5 to 15 phr, more preferably from 8 to 12 phr.

E'(30°) is an indicator of dry balance/handling in a tyre and tan Delta (0 - 30 °C) is an indicator of wet balance/handling in a tyre. As described in the Examples section, the present inventors have discovered that the balance between E'(30°) and tan Delta (0 - 30 °C) performance can be optimized by controlling the filler/plasticizer ratio. Accordingly, the ratio of the total amount of the filler system to the total amount of the plasticiser system on a parts per hundred rubber (phr) basis in the rubber composition is at least 1.75:1, preferably at least 1.80:1, more preferably at least 1.9:1, still more preferably at least 2.0:1, yet more preferably at least 2.05:1. Preferably, the ratio of the total amount of the filler system to the total amount of the plasticiser system on a parts per hundred rubber (phr) basis in the rubber composition is from 1.75:1 to 5:1, more preferably from 1.77:1 to 4:1, still more preferably from 1.80:1 to 3.1:1, yet more preferably from 2.0:1 to 3:1, e.g. 2.05:1 to 2.5:1.

### Additional components

In addition to the components described above, the rubber compositions may comprise additional components that the skilled person would include in order to prepare rubber compositions that are suitable in the preparation of pneumatic tyres. These include, for example, vulcanising agents (such as sulphur), vulcanisation accelerators, vulcanisation accelerator auxiliaries, silane coupling agents, anti-degradation agents (such as antioxidants or anti-ozonants), waxes, and processing agents.

### Preferred compositions

In a preferred embodiment, the rubber composition comprises:
a copolymer of styrene and butadiene (SBR), optionally functionalised, having a glass transition temperature (T_{g}) of less than -20 °C;
a plasticiser system comprising one or more hydrocarbon resins, wherein the total amount of hydrocarbon resin in the rubber composition is at least 45 phr; and
a filler system comprising, preferably consisting of:
   a first silica having a CTAB surface area of greater than 150 m²g⁻¹, preferably greater than 180 m²g⁻¹, wherein the first silica is present in the rubber composition in an amount of at least 110 phr;
   a low or very low surface area silica, preferably having a CTAB surface area of from 60 to 120 m² g⁻¹ wherein the low or very low surface area silica is preferably present in the rubber composition in an amount of from 3 to 20 phr, preferably from 5 to 15 phr, more preferably from 8 to 12 phr; and
   carbon black, preferably present in the rubber composition in an amount of from 0.5 to 40 phr, more preferably from 10 to 30 phr, still more preferably from 15 to 25 phr, yet more preferably 18 to 22 phr,
wherein the ratio of the total amount of the filler system to the total amount of the plasticiser system on a parts per hundred rubber (phr) basis in the rubber composition is at least 1.75:1.

In another preferred embodiment, the rubber composition comprises:
at least two different copolymers of styrene and butadiene (SBR), both of which are optionally functionalised, both having a glass transition temperature (T_{g}) of less than -20 °C;
a plasticiser system comprising one or more hydrocarbon resins, wherein the total amount of hydrocarbon resin in the rubber composition is at least 45 phr; and
a filler system comprising, preferably consisting of:
   a first silica having a CTAB surface area of at least 150 m²g⁻¹, preferably greater than 180 m²g⁻¹, wherein the first silica is present in the rubber composition in an amount of at least 110 phr;
   a low or very low surface area silica, preferably having a CTAB surface area of from 60 to 120 m² g⁻¹, wherein the low or very low surface area silica is preferably present in the rubber composition in an amount of from 3 to 20 phr, preferably from 5 to 15 phr, more preferably from 8 to 12 phr; and
   carbon black, preferably present in the rubber composition in an amount of from 0.5 to 40 phr, more preferably from 10 to 30 phr, still more preferably from 15 to 25 phr, yet more preferably 18 to 22 phr,
wherein the ratio of the total amount of the filler system to the total amount of the plasticiser system on a parts per hundred rubber (phr) basis in the rubber composition is at least 1.75:1.

In another preferred embodiment, the rubber composition comprises:
at least two different copolymers of styrene and butadiene (SBR), both of which are optionally functionalised, both having a glass transition temperature (T_{g}) of less than -20 °C;
a plasticiser system comprising, preferably consisting of:
   a first hydrocarbon resin, having a T_{g} of from 0 to 90 °C;
   a second hydrocarbon resin, having a T_{g} of from 0 to 90 °C;
   at least one oil, wherein the total amount of oil in the rubber composition is preferably from 5 to 60 phr, more preferably from 10 to 50 phr, still more preferably from 20 to 40 phr, yet more preferably from 25 to 35 phr;
   preferably wherein the ratio of the amount of the first hydrocarbon resin in the rubber composition to the amount of the second hydrocarbon resin in the rubber composition on a parts per hundred rubber (phr) basis is from 0.8:1.2 to 1.2:0.8, preferably from 0.95:1.05 to 1.05:0.95, more preferably substantially 1:1.
   wherein the total amount of hydrocarbon resin in the rubber composition is at least 45 phr; and
a filler system comprising, preferably consisting of:
   a first silica having a CTAB surface area of at least 150 m²g⁻¹, preferably greater than 180 m²g⁻¹, wherein the first silica is present in the rubber composition in an amount of at least 110 phr;
   a low or very low surface area silica, preferably having a CTAB surface area of from 60 to 120 m² g⁻¹, wherein the low or very low surface area silica is preferably present in the rubber composition in an amount of from 3 to 20 phr, preferably from 5 to 15 phr, more preferably from 8 to 12 phr; and
   carbon black, preferably present in the rubber composition in an amount of from 0.5 to 40 phr, more preferably from 10 to 30 phr, still more preferably from 15 to 25 phr, yet more preferably 18 to 22 phr,
wherein the ratio of the total amount of the filler system to the total amount of the plasticiser system on a parts per hundred rubber (phr) basis in the rubber composition is at least 1.75:1.

In another preferred embodiment, the rubber composition comprises:
a copolymer of styrene and butadiene (SBR), optionally functionalised, having a glass transition temperature (T_{g}) of less than -20 °C;
a plasticiser system comprising one or more hydrocarbon resins, wherein the total amount of hydrocarbon resin in the rubber composition is at least 47.5 phr; and
a filler system comprising first silica having a CTAB surface area of at least 150 m²g⁻¹, preferably greater than 180 m²g⁻¹, wherein the first silica is present in the rubber composition in an amount of at least 115 phr;

optionally one or more additional fillers; and,
wherein the ratio of the total amount of the filler system to the total amount of the plasticiser system on a parts per hundred rubber (phr) basis in the rubber composition is at least 1.80:1.

In another preferred embodiment, the rubber composition comprises:
at least two different copolymers of styrene and butadiene (SBR), both of which are optionally functionalised, both having a glass transition temperature (T_{g}) of less than -20 °C;
a plasticiser system comprising, preferably consisting of:
   a first hydrocarbon resin, having a T_{g} of from 0 to 90 °C;
   a second hydrocarbon resin, having a T_{g} of from 0 to 90 °C;
   at least one oil, wherein the total amount of oil in the rubber composition is preferably from 5 to 60 phr, more preferably from 10 to 50 phr, still more preferably from 20 to 40 phr, yet more preferably from 25 to 35 phr;
   preferably wherein the ratio of the amount of the first hydrocarbon resin to the amount of the second hydrocarbon resin on a parts per hundred rubber (phr) basis is from 0.8:1.2 to 1.2:0.8, preferably from 0.95:1.05 to 1.05:0.95, more preferably substantially 1:1.
   wherein the total amount of hydrocarbon resin in the rubber composition is at least 47.5 phr; and
a filler system comprising, preferably consisting of:
   a first silica having a CTAB surface area of at least 150 m²g⁻¹, preferably greater than 180 m²g⁻¹, wherein the first silica is present in the rubber composition in an amount of at least 115 phr;
   a low or very low surface area silica, preferably having a CTAB surface area of from 60 to 120 m² g⁻¹, wherein the low or very low surface area silica is preferably present in the rubber composition in an amount of from 3 to 20 phr, preferably from 5 to 15 phr, more preferably from 8 to 12 phr; and
   carbon black, preferably present in the rubber composition in an amount of from 0.5 to 40 phr, more preferably from 10 to 30 phr, still more preferably from 15 to 25 phr, yet more preferably 18 to 22 phr,
wherein the ratio of the total amount of the filler system to the total amount of the plasticiser system on a parts per hundred rubber (phr) basis in the rubber composition is at least 1.80:1.

### Method of preparation

In preparing the rubber composition of the present invention, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

Unless otherwise indicated, the amounts of the components in the rubber compositions of the present invention are provided in parts per hundred rubber (phr), which means parts by weight per hundred parts of elastomer (or of the total elastomers if several elastomers are present). The term "rubber composition" may be used interchangeably with the term "rubber compound".

### Pneumatic tyres

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, a sports tyre, or a high performance tyre.

In view of the above, the present invention is directed to a pneumatic tyre comprising the rubber composition of the present invention and/or a pneumatic tyre prepared from the rubber composition of the present invention.

In a further aspect, the present invention is directed to the use of the rubber composition in the manufacture of a pneumatic tyre.

The part of the tyre in which the rubber composition of the present invention is used is not specifically limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

### EXAMPLES

The present invention will now be described by the following non-limiting examples.

### Measurement methods

*Brunauer-Emmett-Teller (BET or NSA) specific surface area* - measured by the BET method according to the method described in the Journal of the American Chemical Society, Vol. 60, page 309, February 1938, and corresponding to standard NF ISO 5794-1, Appendix D (June 2010).

*Cetyltrimethylammonium bromide (CTAB) adsorption method* - measured by the CTAB method according to ASTM D6845.

### Glass transition temperature (T_{g})

Glass transition temperatures (T_{g}) were measured by DSC (Differential Scanning Calorimetry) according to standard ASTM D 7426-08 (for polymers) and ASTM D6604 (for resins).

### Elastic Modulus (E)

E'(30 °C) is an indicator of dry balance/handling in a tyre. Dynamic physical testing to determine E' at 30°C was conducted in accordance with the ISO 4664 standard.

### Loss Factor (tan Delta)

The loss factor (tan Delta, tangent δ, or tan δ) at 0 - 30 °C is used to evaluate wet traction. Dynamic physical testing to determine tan δ was conducted in accordance with the ISO 4664 standard.

### Weight loss (abrasion resistance)

Abrasion resistance is determined by the weight or volume loss of a vulcanized compound as a consequence of its contact with an abrasive roller that is rotated under fixed load in accordance with ISO 4649. A lower level of weight loss indicates a higher level of abrasion resistance.

### Dry H (dry handling)

Qualitative evaluation of tyre dry handling performance on an outside proving ground on a dry handling track. A test driver qualitatively evaluates handling performance based on a list of pre-determined criteria which are consistent across all tested compositions, and gives a numerical score accordingly.

### Wet Braking

Objective evaluation on an outside proving ground on a wet braking track. Wet braking performance is evaluated as a function of the braking distance to pass from initial speed (80 km/h) to a final speed (20 km/h) on a wet surface.

### Slab Test

Tyre compounds were prepared according to the following general method. The following components were compounded in the amounts recited in Table 1 below. The values in Table 1 are all expressed in phr. Table 2 shows measurements of various mechanical properties performed on test pieces of tread prepared using the compositions of Table 1.

For abrasion resistance testing, the specimens (obtained from the composition samples by vulcanization in a preformed mould) are formed into a cylindrical shape with the following dimensions:
- height not less than 6 mm
- diameter of 16 mm with a maximum tolerance of ± 0.2 mm

At least three abrasion tests are done for each composition, using a new sample each time.

### Tyre Test

Tyre data are obtained from tests on cars fitted with tyres having tyre treads made using the rubber compositions.

### General method

The following components were compounded in the amounts recited in Table 1 below. All values in Table 1 are given in Parts per Hundred Rubber (phr). In preparing the rubber composition of the present invention, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer or Banbury mixer may be used. For moulding the rubber composition into sheet or strip shape, any known moulding machine such as extrusion moulding machine or press moulding machine may be used.

### Components

All components were obtained commercially, unless specified otherwise.

### Elastomers:

Europrene 1723 (Versalis) Oil extended eSBR: 23.5% Styrene, 15% Vinyl, Tg - 52°C, 27.3% oil (TDAE)
SSBR HPR520R (JSR TRADING) Mid Tg fxt-sSBR: Sty: 35%; Vinyl (on total): 17%; Tg: -35°C; FxT: Si
SSBR HPR540 (JSR TRADING) Low Tg fxt-sSBR: Sty: 10%; Vinyl (on total): 37%; Tg: -57°C; FxT: Si

### Silica:

U9100GR (Evonik) HSA-SiO₂ (High Surface Area) characterized by: CTAB = 185-215; NSA = 215-255
Ultrasil VN3 (Evonik) STD-SiO2 (Standard Surface Area) characterized by: CTAB = 154-180; NSA = 160-200
Zeosil 1085GR (Solvay) VLSA-SiO₂ (Very Low Surface Area) characterized by: CTAB = 65-95; NSA = 70-110

### Hydrocarbon resins:

Imperia E1780 (EASTMAN) C5-Hydrocarbon Resin, partially Hydrogenated: Glass transition: 69-79°C, MW: 650-750 g/mol
Novares TD100 (RAIN CARBON) C9-Hydrocarbon Resin: Glass transition 45-50 °C; MW: 2600-2800

### Further Additives:

MARTINAL OL 111 (HUBER) Hygilite
Carbon black (Corax^{®} N234)
Silane (Evonik Industries AG Si 69^{®})
RAE Oil
Sulfur
1,3-diphenyl guanidine (DPG)
Dibenzothiazyl disulfide (MBTS)
Zinc oxide (ZnO)
Stearic Acid

**Table 1**

| Composition | **Comp. Ex. 1** | **Comp. Ex. 2** | **Comp. Ex. 3** | **Comp. Ex. 4** | **Comp. Ex. 5** | **Comp. Ex. 6** | **Comp Ex. 7** | **Ex. 1** | **Ex. 2** | **Ex. 3** | **Ex. 4** |
|---|---|---|---|---|---|---|---|---|---|---|---|
| Oil ext e-SBR (including oil)* | 75.6 | 75.6 | 75.6 | 75.6 | 75.6 | 75.6 | 75.6 | 75.6 | 75.6 | 75.6 | 75.6 |
| Oil ext e-SBR (not including oil)* | 55 | 55 | 55 | 55 | 55 | 55 | 55 | 55 | 55 | 55 | 55 |
| Oil in oil ext e-SBR* | 20.6 | 20.6 | 20.6 | 20.6 | 20.6 | 20.6 | 20.6 | 20.6 | 20.6 | 20.6 | 20.6 |
| Mid Tg fxt-sSBR | - | - | - | - | - | 45 | - | - | - | - | - |
| Low Tg fxt-sSBR | 45 | 45 | 45 | 45 | 45 | - | 45 | 45 | 45 | 45 | 45 |
| HSA silica | 85 | 100 | 115 | 100 | 115 | | 70 | 115 | 130 | 130 | 115 |
| STD silica | - | - | - | - | - | 120 | - | - | - | - | - |
| VLSA silica | 10 | 10 | 10 | 10 | 10 | - | 30 | 10 | 10 | 10 | 30 |
| Hygilite | - | - | - | - | - | 20 | - | - | - | - | - |
| CB - N234 | 20 | 20 | 20 | 20 | 20 | 14 | 20 | 20 | 20 | 20 | 20 |
| Silane 69 | 7.9 | 9.24 | 10.57 | 9.24 | 10.57 | 9.6 | 8.20 | 10.57 | 11.9 | 11.9 | 11.11 |
| C5-Hydrocarbon Resin | 20 | 20 | 20 | 23.75 | 27.5 | - | 19 | 23.75 | 23.75 | 27.5 | 21.11 |
| C9-Hydrocarbon Resin | 20 | 20 | 20 | 23.75 | 27.5 | 30 | 26 | 23.75 | 23.75 | 27.5 | 28.89 |
| RAE Oil | 10 | 10 | 10 | 10 | 10 | 10 | 10 | 10 | 10 | 10 | 10 |
| Sulphur | 1.2 | 1.2 | 1.2 | 1.2 | 1.2 | 1.2 | 1.2 | 1.2 | 1.2 | 1.2 | 1.2 |
| DPG | 0.9 | 1.05 | 1.2 | 1.05 | 1.2 | 0.2 | 0.8 | 1.2 | 1.35 | 1.35 | 1.3 |
| MBTS | 0.9 | 0.9 | 0.9 | 0.9 | 0.9 | 1 | 1 | 0.9 | 0.9 | 0.9 | 0.9 |
| ZINC OXIDE | 2.00 | 2.00 | 2.00 | 2.00 | 2.00 | 2.00 | 2.00 | 2.00 | 2.00 | 2.00 | 2.00 |
| STEARIC ACID | 1.00 | 1.00 | 1.00 | 1.00 | 1.00 | 1.00 | 1.00 | 1.00 | 1.00 | 1.00 | 1.00 |
| **Total Filler** | **115** | **130** | **145** | **130** | **145** | **154** | **120** | **145** | **160** | **160** | **165** |
| **Total Plasticizer** | **71** | **71** | **71** | **78** | **86** | **61** | **76** | **78** | **78** | **86** | **81** |
| **Filler/Plasticiser ratio** | **1.63** | **1.84** | **2.05** | **1.66** | **1.69** | **2.54** | **1.59** | **1.86** | **2.05** | **1.87** | **2.05** |

| | | | | | | | | | | | |
|---|---|---|---|---|---|---|---|---|---|---|---|
| * As noted in the Components section, oil extended eSBR comprises 27.3 % extender oil. All compositions in Table 1 therefore comprise 55 phr extender oil. The total amount of elastomer (Oil ext eSBR and either Mid Tg fxt-sSBR or Low Tg fxt-sSBR) therefore sums to 100 phr in all compositions. | | | | | | | | | | | |

### Slab Test

Compositions Comp. Ex. 1-5 and Ex. 1-3 were subject to slab testing to determine weight loss performance, E' (30 °C), and tan Delta (0 - 30 °C). The results are shown in Table 2 and are illustrated in Figure 1.

**Table 2**

| **Composition** | **Comp. Ex. 1** | **Comp. Ex. 2** | **Comp. Ex. 3** | **Comp. Ex. 4** | **Comp. Ex. 5** | **Ex. 1** | **Ex. 2** | **Ex. 3** |
|---|---|---|---|---|---|---|---|---|
| Weight Loss (mg) | 138 | 134 | 137 | 167 | 144 | 138 | 135 | 149 |
| E' (30 °C) | 5.6 | 8.7 | 11.7 | 8.7 | 9.9 | 11.5 | 14.1 | 14.0 |
| tan Delta (0 - 30 °C) | 0.641 | 0.657 | 0.665 | 0.715 | 0.775 | 0.718 | 0.709 | 0.731 |

As shown in Figure 1, the present inventors have found that the balance of certain properties, including E' (30 °C) and tan Delta (0 - 30 °C), can be optimized by controlling the amount of certain ingredients present within a rubber composition and/or the relative ratios thereof. Meanwhile, a desirable level of abrasion resistance can also be maintained.

E'(30°) is an indicator of dry balance/handling in a tyre. As shown in Figure 1, as the amount of filler system present in the rubber composition increases, the E'(30°) performance increases. For example, compositions Comp. Ex. 1 and Comp. Ex. 2 differ almost exclusively in the amount of filler system, namely silica, more specifically high surface area silica, present in the composition. Com. Ex. 2 exhibits a notable improvement in E'(30°) as compared with Comp. Ex. 1. This trend is replicated across the tested compositions.
tan Delta (0 - 30 °C) is an indicator of wet balance/handling in a tyre. As shown in Figure 1, as the amount of plasticiser system present in the rubber composition increases, the tan Delta (0 - 30 °C) performance increases. For example, compositions Comp. Ex. 3 and Comp. Ex. 5 differ only in the amount of plasticiser system, namely hydrocarbon resin, present in the composition. Comp. Ex. 5 exhibits a notable improvement in tan Delta (0 - 30 °C) as compared with Comp. Ex. 3. This trend is replicated across the tested compositions.

Accordingly, by controlling the amount of filler system, silica, plasticiser system, and/or hydrocarbon resin present in a composition, the E'(30°) and/or tan Delta (0 - 30 °C) performance can be optimized. As shown in Figure 2, the balance between E'(30°) and tan Delta (0 - 30 °C) performance can be optimized by controlling the filler system / plasticizer system ratio.

As shown in Table 2, the level of weight loss did not differ significantly across the tested compositions, meaning that a desirable level of abrasion resistance is maintained across the tested compositions.

### Slab and Tyre test

Comp. Ex. 6-7 and Ex. 4 were subject to slab testing to determine weight loss performance and to tyre testing to determine Dry H and wet braking performance. The results are shown in Table 3. Comp. Ex. 7 and Comp. Ex. 4 differ primarily in the amount of filler system, namely silica, more specifically high surface area silica, and the filler system/plasticiser system ratio. The difference in amounts of other additives, such as zinc salt of fatty acid, was made merely to improve processability and is not thought to have any impact on the performance parameters under evaluation.

In Test 1, Comp. Ex. 6 was compared against Comp. Ex. 7. In Test 2, Comp. Ex. 6 was compared against Ex. 4. Accordingly, Comp. Ex. 6 represents a common reference point for both tests. Tests 1 and 2 were performed at different times, meaning that the environmental conditions during Test 1 were not the same as those during Test 2. The difference in environmental conditions accounts for the difference in results recorded for Comp. Ex. 6 between Test 1 and Test 2.

**Table 3**

| | **Test 1** | | **Test 2** | |
|---|---|---|---|---|
| Composition | **Comp. Ex. 6** | **Comp Ex. 7** | **Comp. Ex. 6** | **Ex. 4** |

| **Slab Data** | | | | |
|---|---|---|---|---|
| Weight Loss (mg) | 175 | 191 | 165 | 138 |

| **Tyre Data** | | | | |
|---|---|---|---|---|
| Dry H | 7.6 | 7.0 | 7.7 | 7.8 |
| Wet Braking (%) | 100 | 94 | 100 | 102 |
| Wet Braking (m) | 29.2 | 30.9 | 25.0 | 24.0 |

The results in Table 3 confirm that the rubber compositions of the present invention provide a superior balance of properties.

In the slab test, Ex. 4 of the present invention exhibited a lower level of weight loss than reference composition Comp. Ex. 6, whereas Comp. Ex. 7 exhibited a greater level of weight loss than the same reference Comp. Ex. 6. This shows that Ex. 4 of the present invention has superior abrasion resistance.

Similarly, in the tyre test, Ex. 4 of the present invention exhibited improved dry handling and wet braking performance as compared with reference composition Comp. Ex. 6. In contrast, Comp. Ex. 7 exhibited inferior performance as compared against the same reference Comp. Ex. 6. This shows that Ex. 4 of the present invention has superior performance in both wet and dry conditions, making it ideally suited for use in a tyre.

## Claims

1. A rubber composition for a pneumatic tyre, comprising:
a copolymer of styrene and butadiene (SBR), optionally functionalised, having a glass transition temperature (T_{g}) of less than -20 °C;
a plasticiser system comprising one or more hydrocarbon resins, wherein the total amount of hydrocarbon resin in the rubber composition is at least 45 phr; and
a filler system comprising one or more silicas, including a first silica having a CTAB surface area of greater than 150 m²g⁻¹, and optionally one or more additional fillers, wherein the first silica is present in the rubber composition in an amount of at least 110 phr,
wherein the ratio of the total amount of the filler system to the total amount of the plasticiser system on a parts per hundred rubber (phr) basis in the rubber composition is at least 1.75:1.

2. The rubber composition according to claim 1, wherein the ratio of the total amount of the filler system to the total amount of the plasticiser system on a parts per hundred rubber (phr) basis in the rubber composition is at least 1.80:1, more preferably at least 1.9:1, still more preferably at least 2.0:1, yet more preferably at least 2.05:1.

3. The rubber composition according to claim 1 or claim 2, wherein the copolymer of styrene and butadiene has a T_{g} of from -90 to -20 °C, preferably from -75 to -35 °C, more preferably from -60 to -50 °C.

4. The rubber composition according to any preceding claim, wherein the copolymer of styrene and butadiene is functionalised with carboxyl groups, preferably terminal carboxyl groups, more preferably carboxyl groups group of the Formula (I): 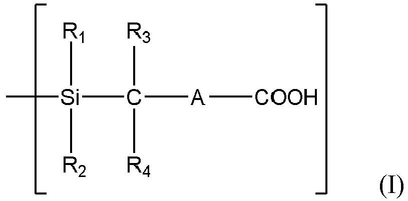 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si;
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉;
R₇ is hydrogen or C₁ to C₆ linear alkyl; and
R₈ and R₉ are the same or different and each independently a C₁ to C₆ linear alkyl.

5. The rubber composition according to any preceding claim, wherein the copolymer of styrene and butadiene is functionalised with silicon-containing groups, preferably with one or more functional groups selected from the group consisting of silane, silyl ether, alkoxysilane, siloxane, aminosilane, and silanol,
more preferably with groups having a structure according to Formula (X): 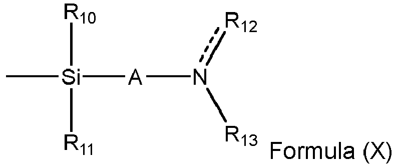 wherein:
A is a C₁-C₁₂ alkylene group or a C₁-C₁₂ alkenylene group;
R₁₀ and R₁₁ are independently selected from a C₁-C₁₂ alkyl group, a C₁-C₁₂ alkenyl group, and a C₁-C₁₂ alkoxy group;
R₁₂ and R₁₃ are independently selected from a C₁-C₁₂ alkyl group, and a -SiR₁₄R₁₅R₁₆ group, wherein R₁₄, R₁₅ and R₁₆ are independently selected from a C₁-C₁₂ alkyl group, a C₁-C₁₂ alkenyl group, and a C₁-C₁₂ alkoxy group, or wherein R₁₂ and the nitrogen atom to which it is bonded represent a branched or unbranched C₃-C₁₂ secondary imino group and R₁₃ is not present.

6. The rubber composition according to any preceding claim, wherein the total amount of hydrocarbon resin in the rubber composition is at least 47.5 phr, more preferably at least 50 phr.

7. The rubber composition according to any preceding claim, wherein the plasticiser system comprises a hydrocarbon resin having a T_{g} of from 0 to 90 °C, preferably from 20 to 90 °C, more preferably from 50 to 80 °C, still more preferably from 60 to 80 °C, yet more preferably from 69 to 79 °C.

8. The rubber composition according to any preceding claim, wherein the plasticiser system comprises a hydrocarbon resin having a T_{g} of from 20 to 70 °C, preferably from 40 to 55 °C, more preferably from 45 to 50 °C.

9. The rubber composition according to any preceding claim, wherein the plasticiser system comprises one or more hydrocarbon resins selected from the group consisting of C₉ resin, a C₅ resin, a terpenic resin, and a rosinic resin.

10. The rubber composition according to any preceding claim, wherein the plasticiser system comprises a first hydrocarbon resin and a second hydrocarbon resin, preferably a C₉ resin and a C₅ resin, preferably wherein the ratio of the amount of the first hydrocarbon resin in the rubber composition to the amount of the second hydrocarbon resin in the rubber composition on a parts per hundred rubber (phr) basis is from 0.8:1.2 to 1.2:0.8, more preferably from 0.95:1.05 to 1.05:0.95, still more preferably substantially 1:1.

11. The rubber composition according to any preceding claim, wherein the plasticiser system further comprises one or more oils, preferably one or more plasticising oils, preferably wherein the total amount of oil in the rubber composition is from 5 to 60 phr, more preferably from 10 to 50 phr, still more preferably from 20 to 40 phr, yet more preferably from 25 to 35 phr.

12. The rubber composition according to any preceding claim, wherein the plasticiser system is present in the rubber composition in an amount of at least 70 phr, preferably from 70 to 130 phr, more preferably from 71 to 100 phr.

13. The rubber composition according to any preceding claim, wherein the first silica is present in the rubber composition in an amount of at least 115 phr, preferably at least 120 phr, more preferably at least 130 phr.

14. The rubber composition according to any preceding claim, wherein the first silica has a CTAB surface area of at least 160 m²g⁻¹, preferably at least 180 m²g⁻¹, more preferably at least 185 m²g⁻¹, still more preferably at least 200 m²g⁻¹

15. The rubber composition according to any preceding claim, wherein the filler system comprises a low or very low surface area silica, preferably having a CTAB surface area of from 40 to 120 m² g⁻¹, more preferably from 50 to 110 m² g⁻¹, still more preferably from 60 to 100 m² g⁻¹, yet more preferably from 65 to 95 m² g⁻¹.

16. The rubber composition according to any preceding claim, wherein the total effective surface area of all silicas in the rubber composition is at least 17,000 phr m² g⁻¹, preferably at least 20,000 phr m² g⁻¹, more preferably at least 20,800 phr m² g⁻¹, still more preferably at least 23,800 phr m² g⁻¹, yet more preferably at least 26,800 phr m² g⁻¹.

17. The rubber composition according to any preceding claim, wherein the filler system is present in the rubber composition in an amount of from 115 phr to 250 phr, more preferably from 120 to 200 phr, still more preferably from 140 to 190 phr.

18. The rubber composition according to any preceding claim, wherein the filler system comprises, preferably consists of:
a first silica having a CTAB surface area of at least 150 m²g⁻¹, preferably greater than 180 m²g⁻¹, wherein the first silica is present in the rubber composition in an amount of at least 110 phr;
a low or very low surface area silica, preferably having a CTAB surface area of from 50 to 110 m² g⁻¹ wherein the low or very low surface area silica is preferably present in the rubber composition in an amount of from 3 to 20 phr, preferably from 5 to 15 phr, more preferably from 8 to 12 phr; and
carbon black, preferably present in the rubber composition in an amount of from 0.5 to 40 phr, more preferably from 10 to 30 phr, still more preferably from 15 to 25 phr, yet more preferably from 18 to 22 phr.

19. The rubber composition according to any preceding claim, wherein the plasticiser system comprises, preferably consists of:
a first hydrocarbon resin, having a T_{g} of from 0 to 90 °C;
a second hydrocarbon resin, having a T_{g} of from 0 to 90 °C, wherein the first and second hydrocarbon resins are different;
at least one oil, wherein the total amount of oil in the rubber composition is preferably from 5 to 60 phr, more preferably from 10 to 50 phr, still more preferably from 20 to 40 phr, yet more preferably from 25 to 35 phr;
preferably wherein the ratio of the amount of the first hydrocarbon resin in the rubber composition to the amount of the second hydrocarbon resin in the rubber composition on a parts per hundred rubber (phr) basis is from 0.8:1.2 to 1.2:0.8, preferably from 0.95:1.05 to 1.05:0.95, more preferably substantially 1:1.
wherein the total amount of hydrocarbon resin in the rubber composition is at least 45 phr.

20. A pneumatic tyre comprising the rubber composition according to any preceding claim.

21. A pneumatic tyre prepared from the rubber composition according to any one of claims 1 to 19.

22. Use of the rubber composition according to any one of claims 1 to 19 in the manufacture of a pneumatic tyre.
